# EUROPÄISCHE PATENTANMELDUNG

(11) **EP 3 300 217 A1**
(43) Veröffentlichungstag der Anmeldung: **28.03.2018**
(21) Anmeldenummer: 16189923.2
(22) Anmeldetag: 21.09.2016
(51) Int. Cl.: H02K 3/24, H02K 1/26

(54) **ANORDNUNG ZUR KÜHLUNG EINER DYNAMOELEKTRISCHEN MASCHINE**

(71) Anmelder: Siemens Aktiengesellschaft, 80333 München (DE)
(72) Erfinder: Kowalski, Matthias, 45478 Mülheim an der Ruhr (DE); Lehmann, Christoph, 47506 Neukirchen-Vluyn (DE)

(57) **Zusammenfassung**

Die Erfindung betrifft eine Anordnung zur Kühlung einer ersten Kühlleitung (12a) in einem Leiterstab (3), wobei eine Führungsplatte (21) angeordnet wird, die dünn ausgebildet ist und über einen Vorsprung (22) die Möglichkeit eröffnet, das Kühlmedium vom Nutgrundkanal (9) in die ersten Kühlleitung (12a) umzulenken.

## Beschreibung

Die Erfindung betrifft eine Anordnung zur Kühlung einer dynamoelektrischen Maschine.

Desweiteren betrifft die Erfindung ein Verfahren zur Herstellung einer Anordnung zur Kühlung einer dynamoelektrischen Maschine

Dynamoelektrische Maschinen wie beispielsweise Turbogeneratoren weisen im Wesentlichen einen um eine Rotationsachse drehbar gelagerten Rotor auf, der eine Rotorwicklung umfasst sowie einen um den Rotor angeordneten Stator, der eine Statorwicklung umfasst. Im Betrieb strömt ein Gleichstrom durch die Rotorwicklung, was zu einem magnetischen Feld führt. Die Ströme durch die Rotorwicklung sind bei den heutigen Turbogeneratoren vergleichsweise hoch, was zur Erzeugung von Wärme führt und somit zu einer Erhöhung der Rotorwicklungstemperatur führt. In der Regel existiert ein Temperaturgrenzwert, der im Betrieb nicht überschritten werden sollte. Damit dieser Grenzwert nicht überschritten wird, wird der Rotor aktiv gekühlt. Hierzu wird unter der Rotorwicklung ein Kanal ausgebildet, durch den ein Kühlmedium strömen kann. Durch das Auftreten von in radialer Richtung wirkenden Kräften aufgrund der Rotation des Rotors erfolgt eine Förderwirkung, so dass das Kühlmedium aus diesem Nutgrundkanal durch radiale Schlitze in der Rotorwicklung nach außen zu einem Luftspalt hin austreten kann. Somit kann das Kühlmedium unmittelbar entlang der Rotorwicklung geführt werden und somit die Verlustwärme abtransportieren.

Allerdings wird der Kühlmediumstrom in Richtung Ballenmitte geringer, was zwangsläufig zu einer Verlangsamung der Kühlmediumströmung im Nutgrundkanal führt. Dies führt dazu, dass die Strömungsgeschwindigkeiten des Kühlmediums am Eintritt des Nutgrundkanals vergleichsweise hoch sind. Allerdings führen hohe Geschwindigkeiten am Anfang des Nutgrundkanals zu einem hohen dynamischen Druck und dadurch zu einem niedrigen statischen Druck. Mit einem geringen statischen Druck in diesem Bereich des Nutgrundkanals ist die Druckdifferenz zwischen dem Luftspalt und dem Nutgrundkanal zu gering um einen genügend starken Kühlmediumstrom zu erzeugen. Die Folge ist, dass vor allem der erste Radialschlitz in der Rotorwicklung mit einem vergleichsweise geringeren Massenstrom mit Kühlmedium versorgt wird und dementsprechend auch der Bereich des Rotorkupfers unterhalb des Schrumpfsitzes, wo keine Kühlschlitze angeordnet werden können, schlecht gekühlt wird. Andererseits sollte besonders der erste Radialschlitz der Rotorwicklung gut gekühlt werden, da der angrenzende Bereich unterhalb des Schrumpfsitzes der Läuferkappe auch durch diesen gekühlt werden soll. Da die Grenztemperatur die Leistung des gesamten Generators limitiert, ist es wünschenswert vor allem den ersten Kühlschlitz besser mit Kühlmedium zu versorgen.

Der erste radiale Kühlschlitz ist in der Nähe der Rotorstirn angeordnet und unterhalb des Kappenrings ausgebildet. Die Auslassbohrung im Keil ist geschrägt, so dass das Kühlmedium in den Luftspalt austreten könnte. Dennoch wird eine gute Kühlung verhindert, da die Strömungsgeschwindigkeiten sehr hoch sind, was auf den kleinen statischen Druck im Nutgrundkanal zurückzuführen ist.

Die Erfindung möchte hier Abhilfe schaffen. Aufgabe der Erfindung ist es, eine verbesserte Kühlmöglichkeit für einen Generator anzugeben.

Gelöst wird diese Aufgabe durch eine Anordnung gemäß Anspruch 1 und durch ein Verfahren zur Herstellung einer Anordnung zur Kühlung gemäß Anspruch 7.

Erfindungsgemäß wird somit eine Anordnung vorgeschlagen, die mit einer Führungsplatte im Nutgrundkanal gezielt ein Kühlmedium in eine erste radiale Kühlleitung führt. Vorgeschlagen wird hierzu, eine wenig Millimeter dicke Führungsplatte aus Kunststoff im oberen Teil des Nutgrundkanals unter die Nutwinkel der Leiternut zu kleben. Somit schließt die Führungsplatte den Raum zwischen den Nutwinkeln und dem Nutgrundkanal ab.

Um die Führungsplatte wird Kühlmedium aus dem Gasraum unter dem Rotorwickelkopf gezielt in die erste Kühlleitung geführt und dort die Kühlung verbessert.

Vorteilhafte Weiterbildungen sind in den Unteransprüchen angegeben.

In einer ersten vorteilhaften Weiterbildung ist ein Vorsprung vorgesehen, der derart ausgebildet ist, dass das Kühlmedium in Richtung des Leiterstabes ablenkbar ist. Somit wird das Kühlmedium durch den Vorsprung gezwungen seine Richtung, die im Wesentlichen zunächst der Rotationsachsenrichtung folgt, in eine radiale Richtung abzulenken.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Gleiche Bauteile oder Bauteile mit gleicher Funktion sind dabei mit gleichen Bezugszeichen gekennzeichnet.

Ausführungsbeispiele der Erfindung werden nachfolgend anhand der Zeichnungen beschrieben. Diese soll die Ausführungsbeispiele nicht maßgeblich darstellen, vielmehr ist die Zeichnung, wo zur Erläuterungen dienlich, in schematisierter und/oder leicht verzerrter Form ausgeführt.

Im Hinblick auf Ergänzungen der in der Zeichnung unmittelbar erkennbaren Lehren, wird auf den einschlägigen Stand der Technik verwiesen.

Es zeigen:
- Figur 1: eine schematische Darstellung eines Teils des Rotors,
- Figur 2: eine stirnseitige Ansicht des Rotors,
- Figur 3: eine Querschnittsansicht eines Teils der Rotorwicklung,
- Figur 4: eine schematische Darstellung der Strömungsverhältnisse,
- Figur 5: eine weitere schematische Darstellung der Strömungsverhältnisse,
- Figur 6: eine perspektivische Ansicht der Führungsplatte,
- Figur 7: eine Oberansicht der Führungsplatte,
- Figur 8: eine Seitensicht der Führungsplatte,
- Figur 9: eine Schnittdarstellung durch einen Teil der Rotorwicklung,
- Figur 10: eine Seitenansicht der Rotorwicklung,
- Figur 11: eine Schnittansicht durch einen Teil der Rotorwicklung,
- Figur 12: eine Seitensicht während des Einbaus der Führungsplatte.

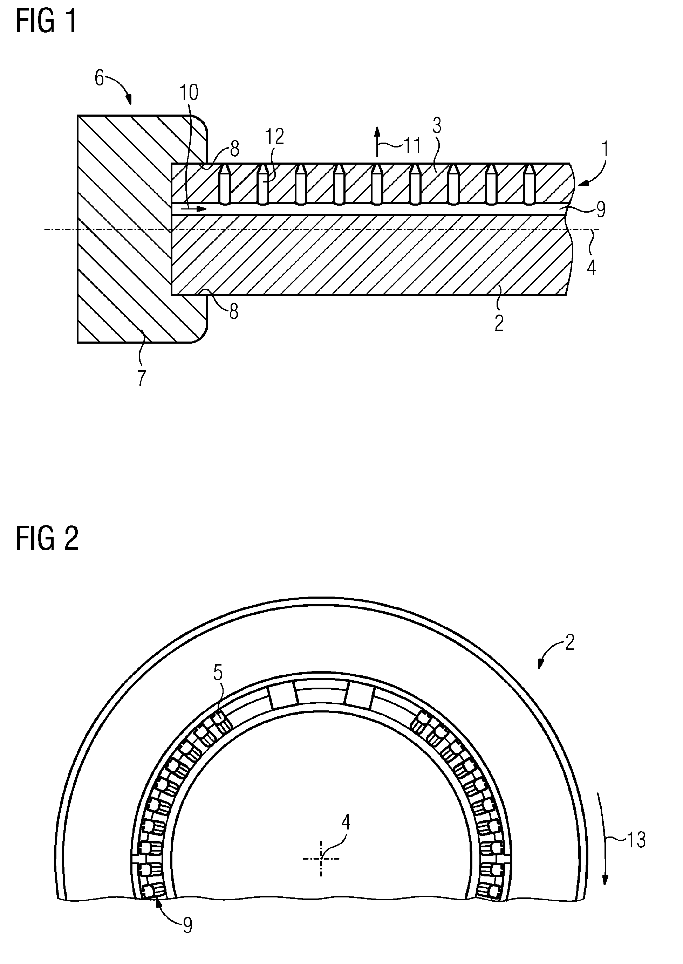

Die Figur 1 zeigt eine Ansicht eines Teils einer Rotorwicklung 1, die in einem Rotor 2 einer dynamoelektrischen Maschine, wie beispielsweise einem Turbogenerator angeordnet ist. Die Rotorwicklung 1 umfasst einen Leiterstab 3, der in einer Rotationsachsenrichtung 4 länglich ausgebildet ist und in Nuten 5 eingebracht wird. An einem stirnseitigen Ende 6 ist eine Läuferkappe 7 angeordnet, die über einen Schrumpfsitz 8 mit dem Rotor 2 fest verbunden ist. Die Kühlung der Rotorwicklung 1 erfolgt folgendermaßen: über einen Nutgrundkanal 9 strömt ein Kühlmedium von dem stirnseitigen Ende 6 in Richtung Rotormitte (nicht dargestellt). Die Strömungsrichtung 10 des Kühlmediums erfolgt hierbei von links nach rechts. Das Kühlmedium kann beispielsweise Luft, Stickstoff oder Wasserstoff sein. Desweiteren weist die Rotorwicklung 1 in radialer Richtung 11 angeordnete Kühlleitungen 12 auf. Aus Gründen der Übersichtlichkeit ist in der Figur 1 lediglich eine Kühlleitung mit dem Bezugszeichen 12 versehen. Die Kühlleitung 12 ist gemäß Figur 1 als eine erste Kühlleitung ausgebildet und somit eine Kühlleitung, die gegenüber dem Stand der Technik verbessert gekühlt werden sollte. Die Rotorwicklung 1 ist charakterisiert durch eine erste Kühlleitung 12a, an der die Strömungsverhältnisse gegenüber den weiteren Kühlleitungen unterschiedlich sind.

Die Figur 2 zeigt einen Teil des Rotors 2. In einer Umfangsrichtung 13 sind mehrere Nutgrundkanäle 9 ausgebildet. Durch diese Nutgrundkanäle 9 strömt im Betrieb ein Kühlmedium. Aus Gründen der Übersichtlichkeit ist lediglich ein Nutgrundkanal mit dem Bezugszeichen 9 versehen. Desweiteren ist aus Gründen der Übersichtlichkeit nur eine Nut mit dem Bezugszeichen 5 versehen.

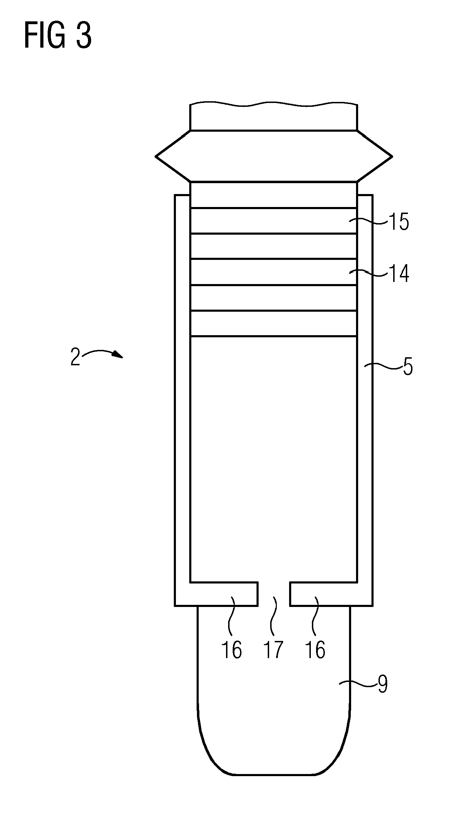

Die Figur 3 zeigt eine vergrößerte Ansicht eines Teils des Rotors 3. In der Nut 5 ist ein Leiter 14, der einen Teil der Rotorwicklung 1 darstellt, angeordnet. Der Leiter 14 umfasst übereinander angeordnete Kupferstäbe 15. Aus Gründen der Übersichtlichkeit ist lediglich ein Kupferstab mit dem Bezugszeichen 15 versehen und außerdem sind nicht alle Kupferstäbe dargestellt. Die Nut 5 wird durch Nutverschlusskeile 16 begrenzt, die am unteren Ende 19 eine Grenze darstellen zu dem Nutgrundkanal 9. Zwischen den Nutverschlusskeilen 16 sind Kühlschlitze 17 angeordnet, die die Möglichkeit schaffen eine strömungstechnische Verbindung zwischen dem Nutgrundkanal 9 und einer radialen Kühlleitung in der Rotorwicklung (in Figur 3 nicht dargestellt) zu ermöglichen.

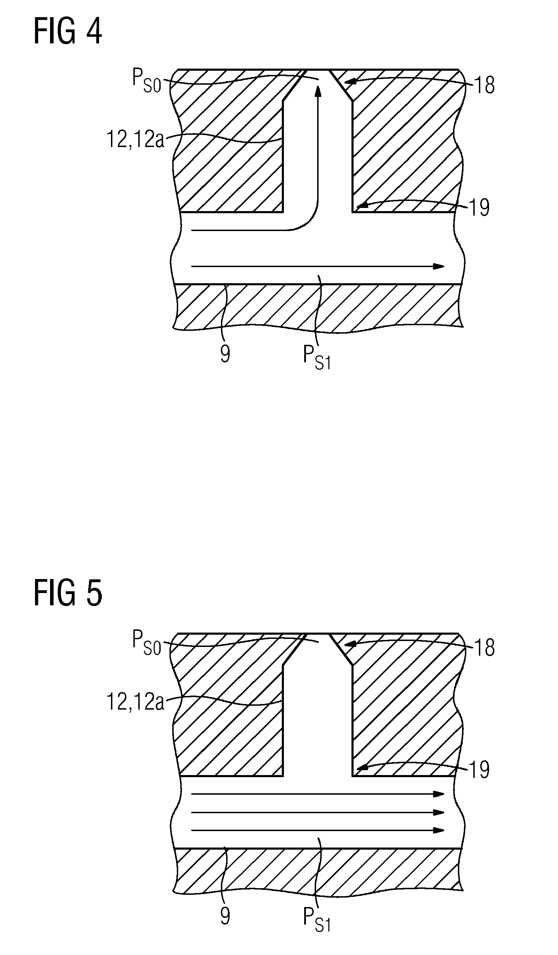

Die Figur 4 stellt eine schematische Ansicht dar, um die Druck- und Strömungsverhältnisse zwischen dem Nutgrundkanal 9 und der Kühlleitung 12 bzw. 12a darzustellen. Am oberen Ende 18 der Kühlleitung 12 bzw. 12a herrscht der Druck Pₛ₀. Am unteren Ende 19 herrscht der Druck Pₛ₁. Eine gute Kühlwirkung wird erreicht, wie in Figur 4 zu sehen ist, wenn der Druck Pₛ₀ kleiner ist als der Druck Pₛ₁ am unteren Ende 19 (P_{S0} < P_{S1}). Eine Darstellung einer vergleichsweise schlechteren Kühlung ist in der Figur 5 zu sehen, bei der die Druckverhältnisse folgendermaßen aussehen: dort ist der Druck Pₛ₀ im Wesentlichen gleich dem Druck Pₛ₁ (P_{S0} ≈ P_{S1}). Gut zu erkennen ist gemäß der Figur 5, dass die Strömung so gut wie gar nicht an das obere Ende 18 gelangt.

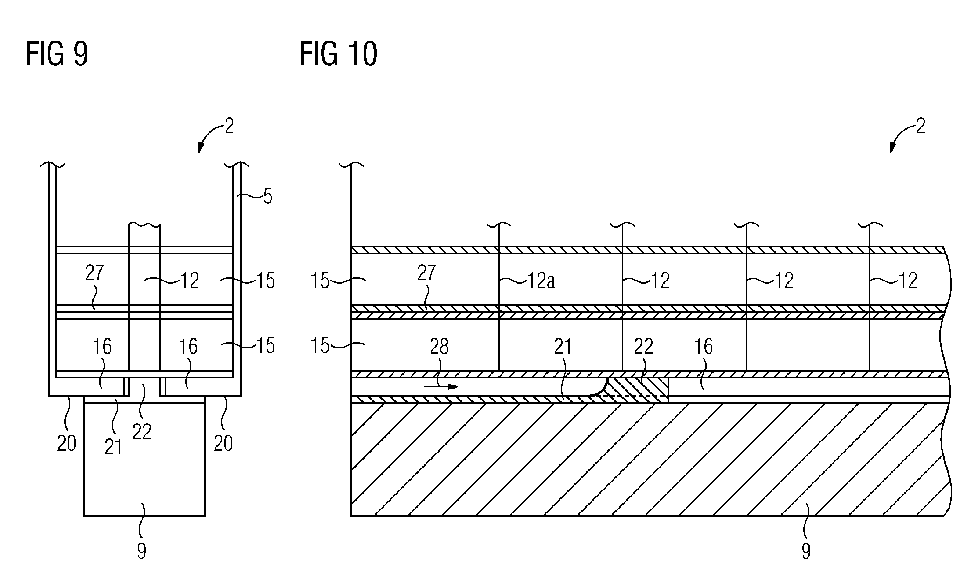

Erfindungsgemäß wird nun gemäß Figur 9 an ein rückseitiges Ende 20 der Nutverschlusskeile 16 eine Führungsplatte 21 angeordnet. Die Führungsplatte 21 wird an das rückseitige Ende 20 der Nutverschlusskeile 16 geklebt. Die Führungsplatte 21 weist einen Vorsprung 22 auf, der derart ausgebildet ist, dass ein Kühlmedium in Richtung Kupferstab 15 ablenkbar ist. Das Kühlmedium strömt senkrecht zur Blattebene entlang der Führungsplatte 21, wobei ein Teil des Kühlmediums oberhalb der Führungsplatte 21 strömt und durch den Vorsprung 22 in die Kühlleitung 12 abgelenkt wird.

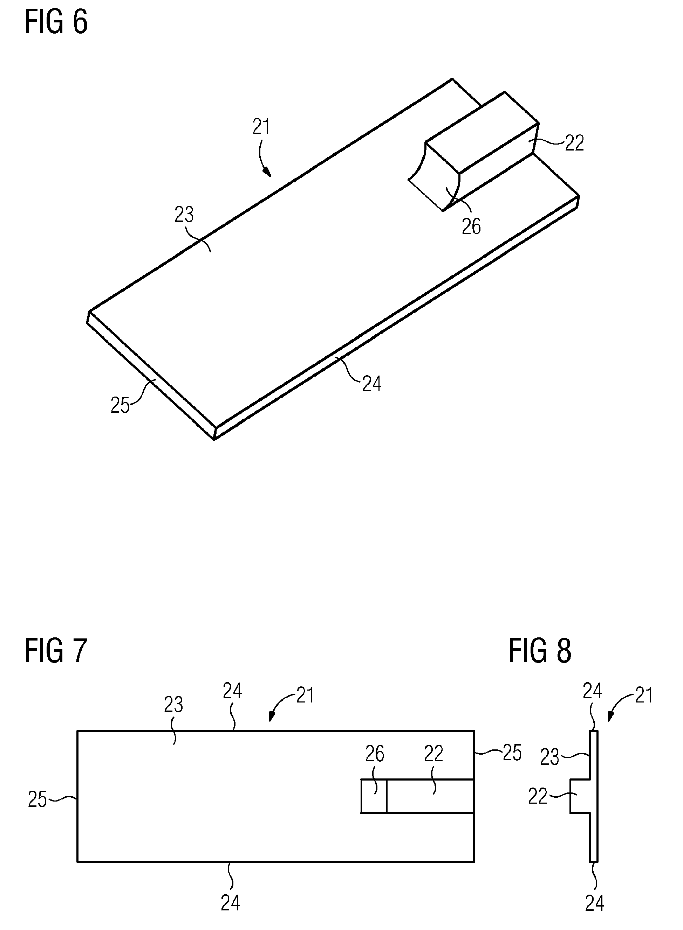

Die Figur 6 zeigt eine perspektivische Ansicht der Führungsplatte 21. Die Führungsplatte 21 umfasst einen flachen Grundkörper 23 aus Kunststoff. Der Grundkörper 23 weist eine lange Seite 24 und eine kurze Seite 25 auf, wobei die Erscheinung des Grundkörpers 23 einem Rechteck ähnelt. An einem Ende des Grundkörpers 23 ist der Vorsprung 22 angeordnet. Der Vorsprung 22 ist bezogen auf die Seiten der langen Seite 24 symmetrisch in der Mitte angeordnet und weist an einem Ende eine Halbrundung 26 auf. Mit dieser Halbrundung 16 kann ein Strömungsmedium, das entlang der Oberfläche strömt, besser nach oben abgelenkt werden.

Die Figur 7 zeigt eine Draufsicht auf die Führungsplatte 21.

Die Figur 8 zeigt eine Seitenansicht der Führungsplatte 21. Die Höhe des Vorsprungs 22 ist hierbei vergleichbar mit der Dicke der Führungsplatte 21 an der langen Seite 24.

Die Figur 10 zeigt eine Seitenansicht eines Teils des Rotors 2. Die Kupferstäbe 15 sind mittels einer Isolierung 27 gegeneinander isoliert. Aus Gründen der Übersichtlichkeit ist lediglich eine Isolation mit dem Bezugszeichen 27 versehen. In der Figur 10 ist zu sehen, dass über die Führungsplatte 21 ein ankommendes Kühlmedium, was durch den Pfeil 28 symbolisiert ist, aufgrund der veränderten Druckverhältnisse nach oben in die erste Kühlleitung 12a gedrängt wird.

Somit wird vor allem die erste Kühlleitung 12a besser mit Kühlmedium versorgt.

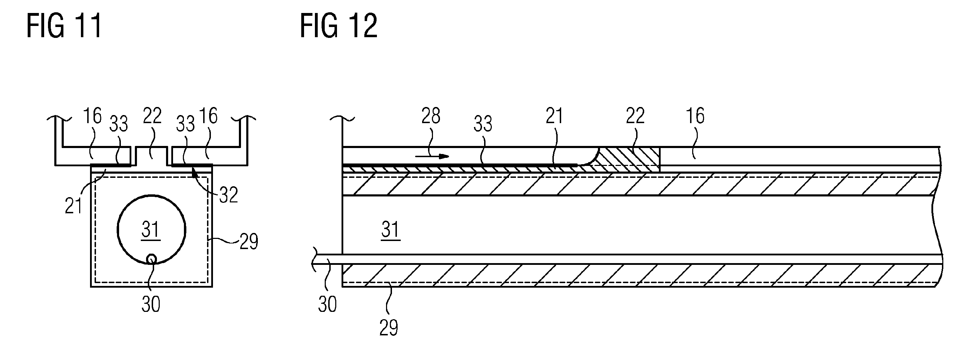

Die Figur 11 zeigt in schematischer Weise wie die Führungsplatte 21 an den Nutverschlusskeil 16 angebracht werden kann. Die Führungsplatte 21 soll an die Nutverschlusskeile 16 geklebt werden, was dadurch erfolgt, dass in den Nutgrundkanal 9 ein mit Pressluft befüllbarer Ballon 29 angeordnet wird.

In der Figur 12 ist die Anordnung des Ballons 29 in einer Seitenansicht dargestellt. Über eine Pressluftleitung 30 wird Pressluft in eine Kammer 31 geführt, wodurch eine Anhebekraft 32 von dem Ballon 29 auf die Führungsplatte 21 ausgeübt wird. Ein zwischen der Führungsplatte 21 und dem Nutverschlusskeil 16 angebrachter Klebstoff 33 führt schließlich zu einer festen Verbindung zwischen dem Nutverschlusskeil 16 und der Führungsplatte 21.

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Anordnung zur Kühlung einer dynamoelektrischen Maschine, wobei die Anordnung
einen um eine Rotationsachse (4) drehbar gelagerten Rotor (2) mit einer Rotorwicklung (1) umfasst,
wobei die Rotorwicklung (1) entlang der Rotationsachse (4) angeordnete Leiterstäbe (3) umfasst,
wobei der Rotor (2) Nuten (5) aufweist, in die die Leiterstäbe (3) angeordnet sind,
wobei die Nut (5) derart ausgebildet ist, dass zwischen dem Leiterstab (3) und der Nut (5) in radialer Richtung (11) gesehen ein Nutgrundkanal(9) ausgebildet ist,
wobei die Rotorwicklung (1) Kühlleitungen (12) aufweist, die im Wesentlichen in radialer Richtung (11) angeordnet sind,
**dadurch gekennzeichnet, dass**
eine Führungsplatte (21) in den Nutgrundkanal (9) derart angeordnet ist,
dass ein Kühlmedium in radialer Richtung (11) gesehen sowohl oberhalb als auch unterhalb strömen kann,
wobei die Führungsplatte (21) auf ihrer zu dem Leiterstab (3) zugewandten Seite einen Vorsprung (22) aufweist, die derart ausgebildet ist, dass ein Kühlmedium in Richtung Leiterstab (3) ablenkbar ist.

2. Anordnung nach Anspruch 1,
wobei die Nut (5) Nutseitenwinkel aufweist, die eine untere Begrenzung der Nut (5) darstellen, wobei zwischen den Nutseitenwinkeln ein Kühlschlitz (17) ausgebildet ist,
wobei die Führungsplatte (21) an den Nutseitenwinkeln angeordnet ist.

3. Anordnung nach Anspruch 2,
wobei der Vorsprung (22) so dimensioniert ist, dass er in den Kühlschlitz (17) ragt.

4. Anordnung nach einem der vorhergehenden Ansprüche, wobei der Vorsprung (22) an einem Ende der Führungsplatte (21) angeordnet ist.

5. Anordnung nach einem der Ansprüche 2 bis 4,
wobei die Führungsplatte (21) an die Nutseitenwinkel mit einem Klebstoff befestigt ist.

6. Anordnung nach einem der vorhergehenden Ansprüche, wobei der Rotor (2) ein stirnseitiges Ende (6) aufweist und von dem stirnseitigen Ende (6) in Rotationsachsenrichtung gesehen eine erste Kühlleitung (12a) aufweist,
wobei die Führungsplatte (21) derart dimensioniert ist, dass das Kühlmedium in Richtung der ersten Kühlleitung (12a) ablenkbar ist.

7. Verfahren zur Herstellung einer Anordnung zur Kühlung einer dynamoelektrischen Maschine,
wobei ein um eine Rotationsachse (4) drehbar gelagerter Rotor (2) mit einer Rotorwicklung (1) ausgebildet wird, wobei die Rotorwicklung (1) Leiterstäbe (3) aufweist, wobei in den Rotor (2) Nuten (5) angeordnet werden, in die die Leiterstäbe (3) eingelegt werden,
wobei die Nut (5) derart ausgebildet wird, dass zwischen dem Leiterstab (3) und der Nut (5) in radialer Richtung (11) gesehen ein Nutgrundkanal (9) ausgebildet wird, wobei die Rotorwicklung (1) Kühlleitungen (12) aufweist, die im Wesentlichen in radialer Richtung (11) angeordnet werden,
**dadurch gekennzeichnet, dass**
eine Führungsplatte (21) in den Nutgrundkanal (9) derart angeordnet wird, dass ein Kühlmedium in radialer Richtung (11) gesehen sowohl oberhalb als auch unterhalb strömen kann, wobei die Führungsplatte (21) auf ihrer zu dem Leiterstab (3) zugewandten Seite einen Vorsprung (22) aufweist, die derart ausgebildet wird, dass ein Kühlmedium in Richtung Leiterstab (3) umgelenkt wird.

8. Verfahren nach Anspruch 7,
wobei die Nut (5) Nutseitenwinkel aufweist, die eine untere Begrenzung der Nut (5)darstellen,
wobei zwischen den Nutseitenwinkeln ein Kühlschlitz (17) ausgebildet wird,
wobei die Führungsplatte (21) an den Nutseitenwinkeln angeordnet wird.

9. Verfahren nach Anspruch 8,
wobei die Führungsplatte (21) an die Nutseitenwinkel geklebt wird.

10. Verfahren nach Anspruch 9,
wobei ein mit Pressluft gefüllter Ballon (29) die Führungsplatte (21) gegen die Nutseitenwinkel drückt.
